# EUROPEAN PATENT APPLICATION

(11) **EP 1 598 646 A2**
(43) Date of publication of application: **23.11.2005**
(21) Application number: 05010801.8
(22) Date of filing: 18.05.2005
(51) Int. Cl.: G01H 1/00

(54) **Aid device for inspection system and display method therefor**

(30) Priority: 18.05.2004 JP 2004148445; 16.05.2005 JP 2005143321
(71) Applicant: OMRON CORPORATION, Kyoto-shi, Kyoto 600-8530 (JP)
(72) Inventor: Hori, Masaki c/o Omron Corporation, Shiokoji-dori Kyoto-shi Kyoto 600-8530 (JP)
(74) Representative: Pohlmann, Eckart

(57) **Abstract**

An aid device is set to an inspection system for obtaining waveform data from an inspection object, calculating a value of a characteristic quantity that characterizes the inspection object and making a judgment whether the inspection object is normal or abnormal. The aid device selects one or more characteristic quantities and one or more parameters, calculates a value by using specified combinations of the selected characteristic quantities and parameters to obtain calculation results, and displays a graph based on each of the calculation results for the specified combinations. The graph has at least two axes, each representing a characteristic quantity set or a parameter set and makes a display by varying density, color, height or size corresponding to the results of the calculation.

## Description

### Background of the Invention

This invention relates to an aid device for an inspection system such as an abnormal sound detecting system and a method of display for such a device.

Very many rotary machines incorporating a motor are used in automobiles and household electric appliances. Rotary machines mounted to an automobile include the engine, the power steering machine, the power seats and the transmission. Household electric appliances incorporating a motor include refrigerators, air conditioners and washing machines. When such a rotary machine is operated, a sound is generated due to the rotation of the motor.

Sounds that originate from a motor include both a normal sound which is necessarily generated with the rotation of the motor and an unusual sound generated when something is wrong with the motor. An unusual sound may be generated for different causes such as an abnormality in the bearing, an abnormal contact inside, an unbalanced condition and the introduction of a foreign object. If an unusual sound occurs at a regular rate of once per rotation, the possible cause may be a chipped gear, a foreign object that may have been caught inside, a spot defect and the instantaneous rubbing between a rotary component and a stationary component. Sounds that give an unpleasant sensation may be of any frequency within the audible range between 20Hz and 20kHz. An unpleasant sound may have a frequency of about 15kHz. In other words, a sound of a specified frequency component can be an abnormal sound. It naturally goes without saying that abnormal sounds can be of any frequency.

Sounds that accompany an abnormal condition are unpleasant but may also cause another kind of abnormal condition. Thus, it is a common practice at a production factory to carry out a sensory test, relying upon the five senses of inspectors in order to detect abnormal conditions and this includes listening with ears and touching by the hands to feel vibrations. A sensory test may mean any test conducted by using the human ability to sense.

In the technical field of automobile production, there has recently been a significant increase in the requirement regarding the sound quality, that is, the need for an automated quantitative test on moving parts of automobiles such as the engine and the transmission. Qualitative tests of the conventional type such as sensory tests as described above can no long satisfy the needs of the modem days.

In view of this situation, devices for detecting abnormal sounds are coming to be developed for reliably carrying out a quantitative test according to a clear standard. These are devices for automating a conventional sensory test, adapted to measure the vibrations and sound from a moving part of a product and to inspect the frequency components of analog signals by means of a frequency analyzer making use of an FFT algorithm or the like, as described in Japanese Patent Publication Tokkai 11-173909, although a bandpass filter may be used instead for the analysis of analog signals.

A frequency analyzer, as disclosed in aforementioned Japanese Patent Publication Tokkai 11-173909, is adapted to analyze a time signal into a frequency region by means of a fast Fourier transform algorithm. Since the frequency range of abnormal sounds is more or less determined, it is possible to extract frequency components corresponding to a specified range and to obtain a characteristic quantity from the extracted component. Thus, the absence and presence of an abnormal condition and the cause of its presence can be estimated from such a characteristic quantity by solving a fuzzy logic problem or the like. Such an inspection system can not only make determinations automatically according to a once determined standard but also record and store the waveform data at the time of the determination in a memory device within the system.

Such an inspection system for an abnormal sound is required to select various parameters to be used for selecting optimum characteristic quantities for the inspection and calculating values of the selected characteristic quantities. At the present time, however, the selection of characteristic quantities and parameters is being made by the user based only on his/her experience and instinct. Although Japanese Patent Publication Tokkai 9-44465 on optimization method and device using a genetic (hereditary) algorithm disclosed hierarchical genetic and parallel genetic algorithms that may be expected to improve the accuracy of inspection, conventional inspection systems such as disclosed in aforementioned Japanese Patent Publication Tokkai 11-173909 still rely upon human experience and instinct in the extraction of characteristic quantities and selection of parameters for the calculation of the characteristic quantities. This means that human experience and instinct are to be relied upon to an unreasonable degree in order to determine the presence or absence of an abnormal condition and to select parameters for the calculation of characteristic quantities for such a determination based on thousands of data items.

When a waveform is analyzed, for example, the given waveform is characterized in various ways. In order to obtain one such characteristic quantity, usually a number of parameters must be used such that the value of the characteristic quantity will change as these parameters are varied. If parameters are selected appropriately, the characteristic of the given waveform becomes more apparent as the value of this characteristic quantity. Thus, it is extremely important to adjust these parameters.

Even with a single parameter, there are many patterns to be set. Thus, it is a complicated work to compare the calculated results of the characteristic quantity while the setting is sequentially changed and it is difficult to set the parameter correctly. It is also difficult to ascertain in which of the plurality of characteristic quantities the characteristics of the waveform will appear as the number of combinations of the parameters increases.

In the case of a production line, in particular, an early determination of optimum parameters is very important. If human experience and instinct alone are relied upon, the determination is too time-consuming.

Problems also exist in an attempt to apply a hierarchical genetic algorithm of aforementioned Japanese Patent Publication Tokkai 9-44465 for the determination of optimum parameters for an abnormal sound inspection system. Parameters must be set by a trial-and-error method even for a genetic algorithm without a hierarchical structure. For accumulating such parameters in a hierarchical structure, a trial-and-error routine just as cumbersome as the selection of a characteristic quantity and a parameter by experience and instinct would be required in order to obtain a desired result.

Since the control of a genetic algorithm itself becomes complicated, it is difficult to incorporate a search method corresponding to the degree of influence among the parameters. Thus, even if a method of Japanese Patent Publication Tokkai 9-44465 is used, it is difficult to obtain optimum parameters effectively in a short time.

In the case of a genetic algorithm, furthermore, even if characteristic quantities or parameters to be finally used by an abnormal sound inspection system are determined, it is not possible for the user to learn how they were determined or to find out if they are really optimum quantities or parameters. Since an accurate judgment cannot be made without the conditions being optimized, the inspection of abnormal sound will have to be carried out by blindly believing that the determined characteristic quantities or parameters are optimum ones.

### Summary of the Invention

It is therefore an object of this invention to provide an aid device and a display method for an inspection system for obtaining waveform data from an inspection object, calculating a value of a characteristic quantity that characterizes the inspection object and thereby making a judgment whether the inspection object is normal or abnormal, by aiding the user to effectively determine characteristic quantities and parameters and to visually ascertain that they are optimum as well as the difference between a normal waveform and an abnormal waveform.

An aid device embodying this invention may be characterized as comprising selecting means for selecting one or more characteristic quantities and one or more parameters, calculating means for calculating a value for given waveform data by using specified combinations of the selected characteristic quantities and parameters, and display means for displaying a graph based on results of calculation by the calculating means, the graph having at least two axes, each of these two axes being formed by one selected from the group consisting of the one or more characteristic quantities and one or more parameters selected by the selecting means.

In the above, the waveform data may consist of two object waveform data for comparison and the calculating means may be adapted to calculate the values for these two obj ect waveform data by using the specified combinations to obtain calculation results and to carry out comparison calculation between the calculation results, the graph displayed by the display means being based on results of this comparison calculation. The graph may be arranged to make a display by varying density, color, height or size corresponding to the results of the comparison calculation.

The waveform data may consist of a plurality of waveform data belonging to a same group and the calculating means may be adapted to calculate the value for each of these plurality of waveform data by using the specified combinations to thereby obtain calculation results and to determine at least either of an effective characteristic quantity for the judgment and a parameter for calculating a value of the effective characteristic quantity based on the calculation results on each of the specified combinations for the plurality of data.

A display method embodying this invention is for an aid device as described above and may be characterized as comprising the steps of selecting one or more characteristic quantities and one or more parameters, calculating a value by using specified combinations of the selected characteristic quantities and parameters to thereby obtain calculation results and displaying a graph, as described above, based on each of the calculation results for the specified combinations, the graph having at least two axes, each of these two axes being formed by one selected from the selected characteristic quantities and parameters.

According to this invention, a graph is displayed by using characteristic quantities and parameters to form two or more coordinate axes, corresponding to the calculated results. Thus, the user can easily determine visually which combinations of characteristic quantities and parameters are effective and hence can easily grasp the characteristics of given waveform data, that is, the difference among a plurality of waveform data.

Throughout herein, the expression "parameter" is intended to mean any item that may be set in and can influence the calculation of a value of a characteristic quantity for given waveform data. The following two kinds of such parameter may be considered with reference to a given characteristic quantity. Parameters of one kind are those for a preliminary process to be carried out on a measured waveform before a value of the characteristic quantity is actually calculated. If such parameters are changed, the waveform that is inputted to the calculating means for carrying out the calculation will change even if the measured waveform is the same. Examples of parameter of this kind include constants related to a filter. If the upper and lower limit values of a frequency filter are changed, for example, the change affects the frequency components that pass through the filter and hence also the waveform that is inputted to the calculating means for calculating a value of its characteristic quantity. Other examples of a parameter for such preliminary processing include the number of smoothing data for an envelop line in a waveform conversion process. Parameters of the other kind are for the calculation of a value of a characteristic quantity itself, that is, parameters that are essentially required for carrying out the calculation, affecting the results of the calculation even if the waveform inputted to the calculating means is the same. Examples of parameter of this kind include those for specifying a target frequency range for the characteristic quantity or threshold values with which characteristic quantities are compared.

### Brief Description of the Drawings

Fig. 1 is a block diagram of an aid device embodying this invention.
Fig. 2 is an example of display by the waveform data input indicating part.
Fig. 3A is an example of waveform data reading screen, and Fig. 3B is an example of waveform data saving screen.
Fig. 4 is an example of calculation mode selection screen of the calculation mode switching part.
Fig. 5 is an example of selection screen by the axis selecting part.
Figs. 6-8 are examples of setting screen by the axis pattern setting part.
Figs. 9 and 10 are examples of display screen by the calculation result display part.
Fig. 11 is a drawing for showing the principle of comparison calculation carried out by the calculating part.
Fig. 12 is an example of combined display screen.
Fig. 13 is a functional block diagram of a portion including the calculating part according to a first embodiment of the invention.
Figs. 14 and 15 are a flowchart for explaining the functions of the first embodiment of the invention.
Fig. 16 is a functional block diagram of a portion including the calculating part according to a second embodiment of the invention.
Fig. 17 is a flowchart for explaining the functions of the second embodiment of the invention.
Figs. 18 and 19 are a flowchart for explaining a portion of the functions of a third embodiment of the invention.
Fig. 20 is a functional block diagram of a portion including the calculating part according to a fourth embodiment of the invention.
Fig. 21 is a functional block diagram of a portion including the calculating part according to a fifth embodiment of the invention.
Figs. 22 and 23 are a flowchart of the operations carried out by an aid device according to the fifth embodiment of the invention.
Fig. 24 is a functional block diagram of a portion including the calculating part according to a sixth embodiment of the invention.
Figs. 25 and 26 are a flowchart for explaining the functions of the sixth embodiment of the invention.
Fig. 27 is a flowchart for an example of using this embodiment.

### Detailed Description of the Invention

An abnormal sound inspection system for which characteristic quantities and parameters are set according to the present invention will be briefly explained first. This inspection system is adapted to carry out a preprocessing on waveform data obtained through a vibration sensor or a sound microphone, thereafter to calculate values of specified characteristic quantities and to judge the object of inspection to be "good", "no good" or "undetermined" by using effective ones of the calculation results. Different kinds of filters such as bandpass filters, low pass filters and high pass filters are provided for the preprocessing, and many kinds of characteristic quantities are also prepared.

For each object of inspection, the types of preprocessing and characteristic quantities that are effective in determining whether it is "good" or "no good" are sometimes more or less known such that it turns out to be wasteful to calculate values of characteristic quantities that are not very effective. According to this invention, therefore, a function is provided for providing data for determining which characteristic quantities are suitable for the object of inspection. Although a method of calculation is determined for each characteristic quantity, its value obtained by the calculation and hence any judgment based thereupon also will change as parameters are changed. In other words, even if an originally effective characteristic quantity is used, a wrong judgment may be rendered unless parameters are correctly set. An aid device according to this invention is therefore provided with a function of providing data for easily finding suitable combinations of characteristic quantities and parameters. Moreover, such provided data are easily understandable visually, displayed on a display device in color or in a three-dimensional representation. For allowing an accurate judgment, numeral data are also displayed.

Explained more in detail, an aid device according to this invention is adapted to calculate a value on the basis of preliminarily set conditions on characteristic quantities and parameters as waveform data for one or more samples are received and to obtain the value of the result of this calculation or its normalized value (hereinafter referred to as the evaluation value). Data based on the evaluation value thus obtained are displayed by using coordinate axes on a display of the aid device. This may be done by assigning the characteristic quantity set and parameter set to the vertical and horizontal axes before the display is made, and the aid device calculates a value under a combination of characteristic quantity and parameter on the vertical and horizontal axes to make a display on each coordinate based on the calculated evaluation value. Since each axis can represent either a characteristic quantity set or a parameter set, combinations between two characteristic quantities, between a characteristic quantity and a parameter and between two parameters are all possible. When the combination is between two parameters, a characteristic quantity is separately set.

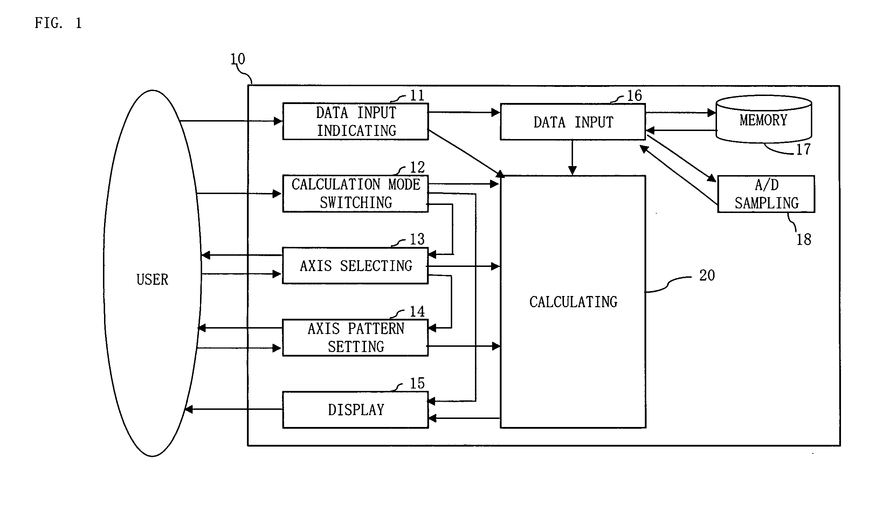

Fig. 1 shows a preferred embodiment of the invention with an aid device 10 provided with a waveform data input indicating part 11, a calculation mode switching part 12, an axis selecting part 13 and an axis pattern setting part 14 as an input interface with the user. The output interface of the aid device 10 is provided with a calculation result display part 15 for displaying results of calculations carried out by a calculating part 20. According to the present embodiment, the input interface and the output interface are realized by displaying input/output screens with specified layouts on the display screen of a display device.

The aid device 10 further comprises the calculating part 20 for calculating values of characteristic quantities according to commands from the input interface, a waveform data input part 16 for providing the calculating part 20 with waveform data according to commands from the waveform data input indicating part 11, a memory device 17 for storing waveform data and an A/D sampling part 18 for obtaining waveform data. The A/D sampling part 18 is connected to a waveform signal detecting means such as a vibration sensor or a sound microphone to sample analog waveform signals received from the connected waveform signal detecting means and to generate digital waveform data.

The waveform data input indicating part 11 is for indicating waveform data to be provided to the calculating part 20 in order to determine conditions for characteristic quantities and parameters. The waveform data to be provided may be existing data stored in the memory device 17 or data that were actually sampled and collected. Which data should be used is indicated by the waveform data input indicating part 11. If the waveform data stored in the memory device 17 are to be used, the file containing the data to be used is indicated. The number of data to be indicated may be only one or may be more than one. Waveform data may be inputted to the memory device 17 as a group. For example, waveform data belonging to a group of "good" products, those belonging to a group of "no good" products and those belonging to a specified kind of products may be inputted.

The waveform data input part 16 serves to receive the specified waveform data according to a received command and to deliver them to the calculating part 20. In other words, when a file name is received, the waveform data input part 16 accesses the memory device 17 to retrieve the waveform data of the received file name and transmits them to the calculating part 20. If the sampling of waveform data is specified, a sampling command is given to the A/D sampling part 18 to obtain the sampling data provided therefrom and to transmit them to the calculating part 20 as waveform data.

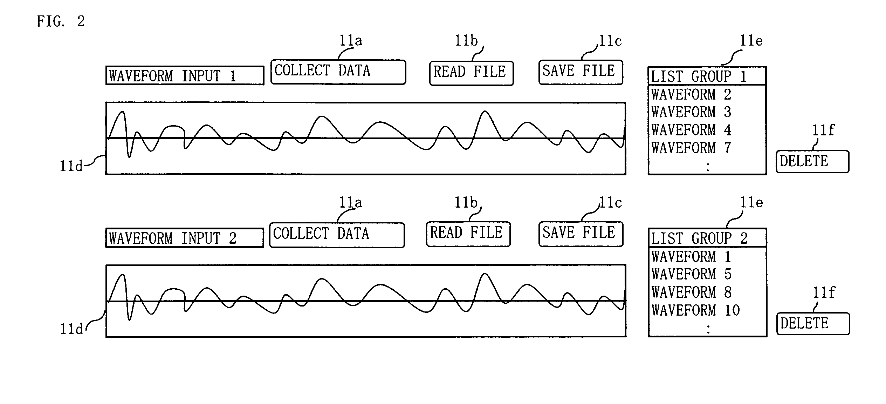

Fig. 2 shows an example of input indicating screen of the waveform data input indicating part 11 displayed on the screen of the display device. In this example, two input indicating areas "Waveform Input 1" and "Waveform Input 2" are prepared. These two input indicating areas have the same functions. It is so arranged that waveform data that are inputted by using the same waveform input area form the same group. Thus, for example, the difference between the characteristic quantities of waveform data belonging to two different groups such as groups of "good" and "no good" products can be easily grasped. Thus, these areas can be used such that if waveform data of "good" products are obtained by using input indicating area "Waveform Input 1 ", they will belong to a first group and if waveform data of "no good" products are obtained by using input indicating area "Waveform Input 2", they will belong to a second group. The input indicating areas can thus be used such that the groups of waveform data may be specified.

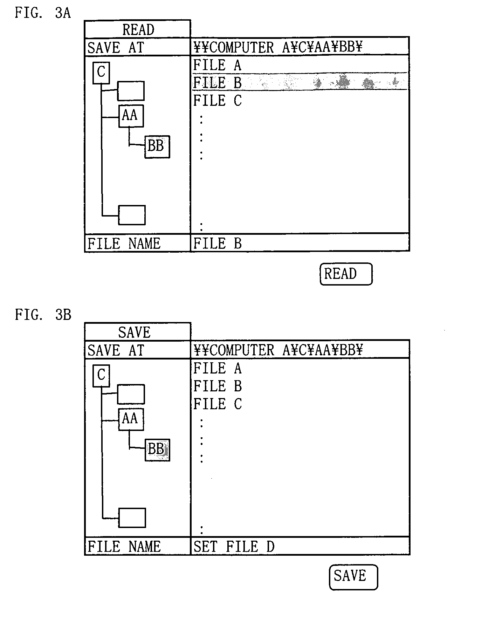

Each input indicating area is provided with button areas 11a, 11b and 11c for inputting various commands. For example, if the "Collect Data" button 11a is clicked, sampling of waveform data is indicated to the waveform data input part 16. If the "Read File" button 11b is clicked, a waveform data reading screen as shown in Fig. 3A is displayed to request that a file to be read be specified. When a file name is specified on this waveform data reading screen, the address of storage and the file name are transmitted to the waveform data input part 16.

Each input indicating area is also provided with a waveform data display area 11d for displaying waveform data obtained by the waveform data input part 16 such as those obtained from the A/D sampling part 18 and sampled as well as those read out of the memory device 17. The waveform data displayed in the waveform data display area 11d can be stored in the memory device 17 by clicking the "Save File" button 11c. When the "Save File" button 11c is clicked, the waveform data saving screen as shown in Fig. 3B is displayed. As the column on the left-hand side of this waveform data saving screen is used to specify a holder for saving and a file name is written in, the waveform data displayed in the waveform data display area 11d are stored at the specified address. This function is usually used for storing waveform data collected by sampling in the memory device 17.

On the right-hand side of the waveform data display area 11d, there is a waveform list display area 11e for displaying a list of waveform data that have been inputted by using the input indicating areas. Unwanted waveform data can be deleted from the list displayed in this waveform list display area 11e by selecting them on this list and then clicking a "Delete" button 11f.

These two input indicating areas are not always used in all applications. They may be used, for example, for comparing a plurality of different waveforms. When conditions of a characteristic quantity or a parameter are being obtained based on a single waveform data item or a plurality of waveform data belonging to a single group, use may be made of only one of the input indicating areas.

The calculation mode switching part 12 is for selecting the contents of calculation and display. As explained above, the waveform data used in the calculations are divided into two groups. The waveform data to be provided to the calculating part 20 may be only those belonging to one of the groups or those belong to both groups. When a value of a characteristic quantity is calculated based on waveform data belonging to both groups, the results of calculations may be further compared such that the difference of characteristics of the plurality of waveforms can be more easily grasped. For this purpose, as waveform data belonging to two groups are inputted, the calculation mode switching part 12 serves to specify the type of the comparison calculations and the selected calculation mode is provided to the calculating part 20.

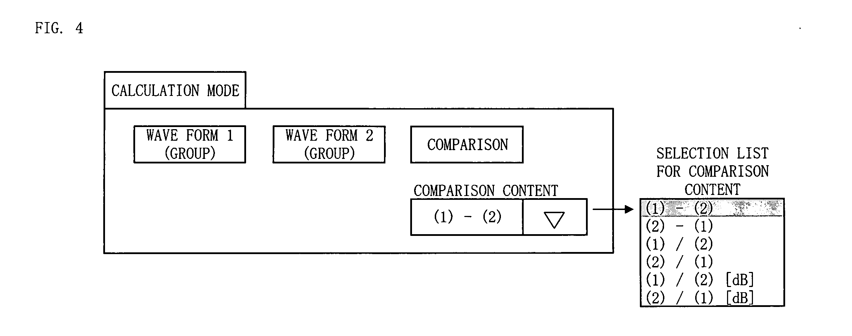

Fig. 4 shows an example of calculation mode selection screen of the calculation mode switching part 12 displayed on the display screen of the display device. By this example, as shown, there are three modes "Waveform 1", "Waveform 2" and "Comparison" that can be selected. If "Waveform 1" is selected, a value of a characteristic quantity is calculated based on waveform data inputted by using "Waveform Input 1 ". If "Waveform 2" is selected, a value of a characteristic quantity is calculated based on waveform data inputted by using "Waveform Input 2". If "Comparison" is selected, values of a characteristic quantity are calculated based on waveform data of two inputted groups by using both "Waveform Input 1" and "Waveform Input 2". In this case, "Comparison Calculation Content" is selected from the list of comparison calculations prepared in the pull-down menu format.

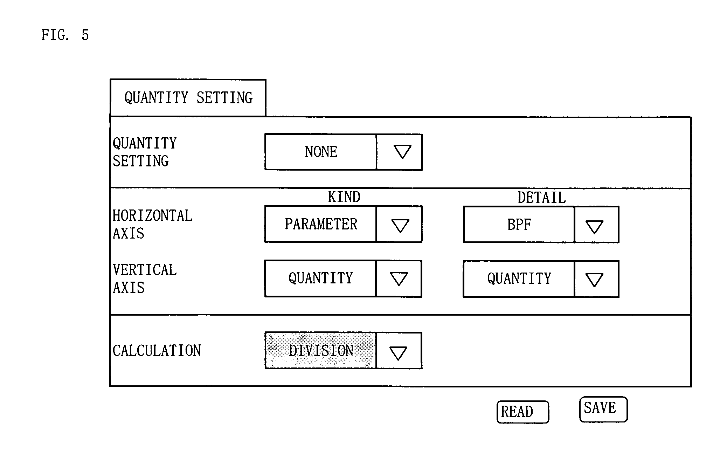

The axis selecting part 13 is for setting the vertical and horizontal axes of the rectangular coordinate system in the graph for displaying the results of the calculations. Fig. 5 shows an example of selection screen by the axis selecting part 13 displayed on the display screen of the display device. Either a characteristic quantity or a parameter may be selected each as the vertical axis or as the horizontal axis. When two parameters are selected for the two axes for a single characteristic quantity, this characteristic quantity is indicated in the first line. A proper characteristic quantity may be selected from a list prepared similarly in a pull-down menu format. If a characteristic quantity is selected for either of the axes, "none" is indicated on this line, as shown as an example in Fig. 5.

On the second line, either a parameter or a characteristic quantity is selected for each of the axes. For each of the selections, a detailed list is prepared and a detailed item is selected. If parameters corresponding to the same detailed item are selected for both axes, the calculation formula to be carried out between the axes is indicated in the third line by selecting from a preliminarily prepared list. The selections thus made are transmitted to the calculating part 20 and required data are sent to the axis pattern setting part 14.

The axis pattern setting part 14 is for actually setting up the data assigned to each of the axes. If a characteristic quantity is indicated, for example, all selectable candidates are displayed such that the one to be calculated is selected therefrom and the selected characteristic quantity is set to the associated axis.

These item data specified through the axis selecting part 13 are transmitted not only to the calculating part 20 but also to the axis pattern setting part 14. The axis pattern setting part 14 serves to actually set up the detailed contents of the characteristic quantity and/or parameter selected for each axis through the axis selecting part 13 and to provide them to the calculating part 20. In the case of an axis representing a characteristic quantity, for example, a selection is made to determine which of the characteristic quantities should be used. In the case of an axis representing a parameter, detailed numerical values for the parameter selected as the detailed item may be set up.

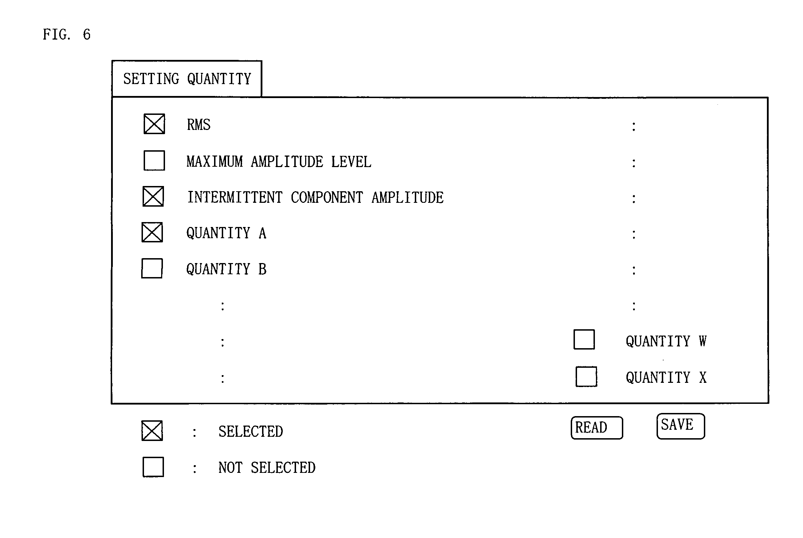

Figs. 6-8 show examples of setting screen by the axis pattern setting part 14 displayed on the display screen of the display device. The screen shown in Fig. 6 is for setting up a characteristic quantity set by displaying a list of usable characteristic quantities. The user may operate a pointing device to click inside the square symbol in front of the name of the selected characteristic quantity to thereby mark the square. The prepared characteristic quantities may include RMS (Root Mean Square) and maximum amplitude level. It goes without saying that the selection as shown in Fig. 6 is not intended to limit the scope of the invention. Such selection may be dispensable such that all characteristic quantities may become the object of calculations.

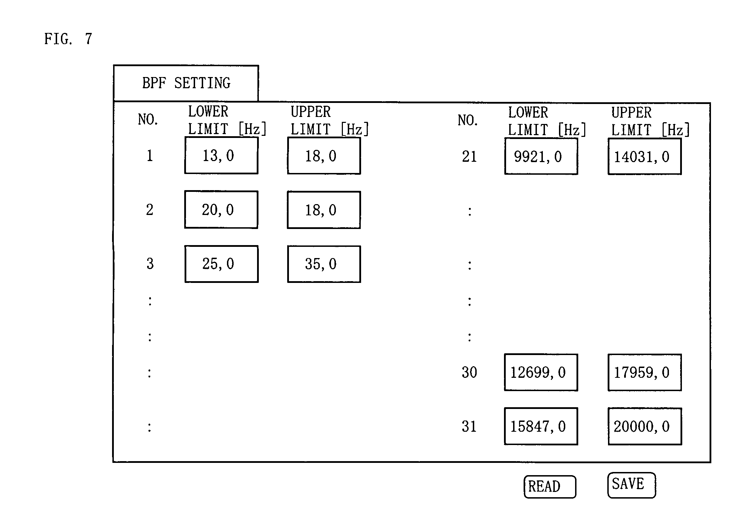

Fig. 7 shows an example where a bandpass filter is selected as parameter with 31 pass band ranges settable as parameter. As shown, each pass band is indicated by its lower and upper limit values. An initial value of zero may be set in all these areas such that the user is required to fill them. Since frequency ranges where a characteristic is likely to appear are more or less anticipated, however, they may be preliminarily set as sets of initial values. Unlike the example shown in Fig. 7, however, one parameter may be set from zero to infinity such that a characteristic quantity not dependent upon frequency may be obtained.

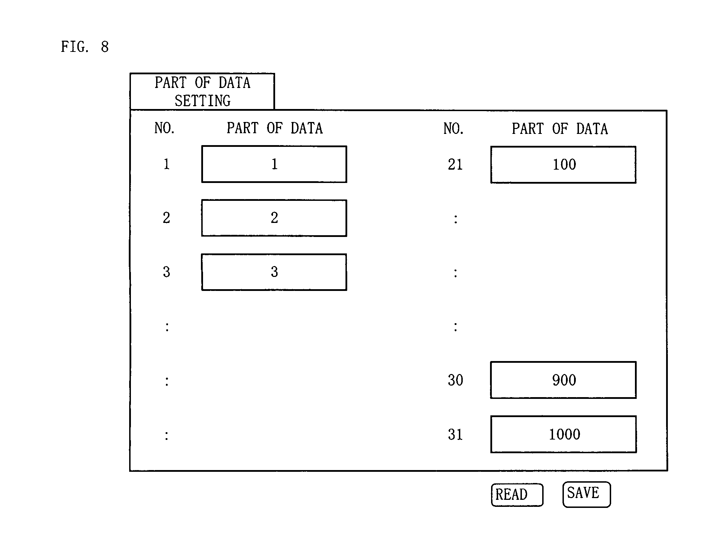

Fig. 8 is an example of setting screen where up to 31 kinds of data parts to be used (such as parts of data that are used where the amplitude is particularly large) are settable as parameters. In this example, too, appropriate initial values may be displayed such that the user may be allowed to change them if necessary. This example may be used, for example, where the maximum amplitude level is selected as the characteristic quantity and a specified number (N) of used data part from the largest amplitude are to be extracted as characteristic quantities.

Buttons marked "Read" and "Save" may be provided, as shown in Figs. 6-8, to be used for saving the patterns of characteristic quantities and parameters that have been created and reading out a pattern created and saved in the past to be used again. These patterns may be stored in the memory device 17 or another separate memory means. A detachable recording medium may be used to store patterns of model characteristic quantities and parameters such that they can be retrieved and used.

The calculating part 20 is for carrying out calculation processes on waveform data provided from the waveform data input part 16 according to conditions set by the input interface of various types described above. The results of these calculation processes are transmitted to the calculation result display part 15. The structure of the calculating part 20 will be explained below in more detail.

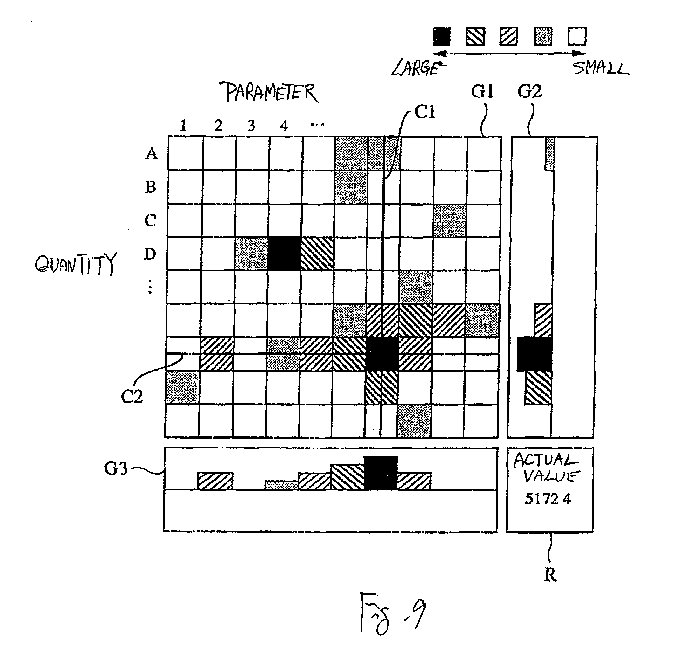

The calculation result display part 15 serves to create a calculation result display screen including a result display graph, based on the calculation results provided from the calculating part 20, and to display it in a specified area on the display device. Fig. 9 shows an example of calculation result display screen. Display graph G1 shows a rectangular coordinate system with its vertical and horizontal axes representing the selected characteristic quantity set or parameter set, the values set by the axis pattern setting part 14 being set along each axis. Each quadrangular area in the graph is shown by a level of density corresponding to the result of calculating a value of a characteristic quantity under the conditions associated with the corresponding vertical and horizontal axes or a normalized result obtained therefrom (the evaluation value). In the illustrated example, the higher the evaluation value, the higher the level of density of the corresponding area. The evaluation value is classified into several levels (5 levels according to the example) and the area is shown by a black color if the evaluation value there belongs to the highest level. The color is white if the evaluation value belongs to the lowest level.

With the evaluation values thus represented by the density of areas, the user can easily locate the areas with a high level of density and hence the combination of corresponding characteristic quantity and parameter. In other words, a combination of characteristic quantity and parameter that is effective to the object waveform data can be easily selected.

According to the illustrated example, there are hair cursors C 1 and C2 provided along the vertical and horizontal direction, movable, say, by using a pointing device and dragging them after placing its pointer on them. Both cursors may be simultaneously moved by dragging if the pointer is placed at the crossing point of the two cursors C1 and C2.

A vertical-axis graph G2 and a horizontal-axis graph G3 are also outputted and displayed respectively on the right-hand side and below the main display graph G1, respectively displaying the evaluation values of the areas on the hair cursors C 1 and C2. The vertical-axis and horizontal-axis graphs G2 and G3 show evaluation values not only by the density but also by height such that the user can more easily locate areas with a high evaluation value. The height of these bar graphs may be arranged such that areas with the same level of density will have the same height or the height will vary according to the actual evaluation value even if two areas show a same level of density.

A value display area R may be further provided for displaying the actual numerical value of the evaluation value of the area indicated by the two hair cursors C1 and C2. From the numerical outputs thus made, the user can more reliably select a combination of characteristic quantity and parameter that provides a higher evaluation value.

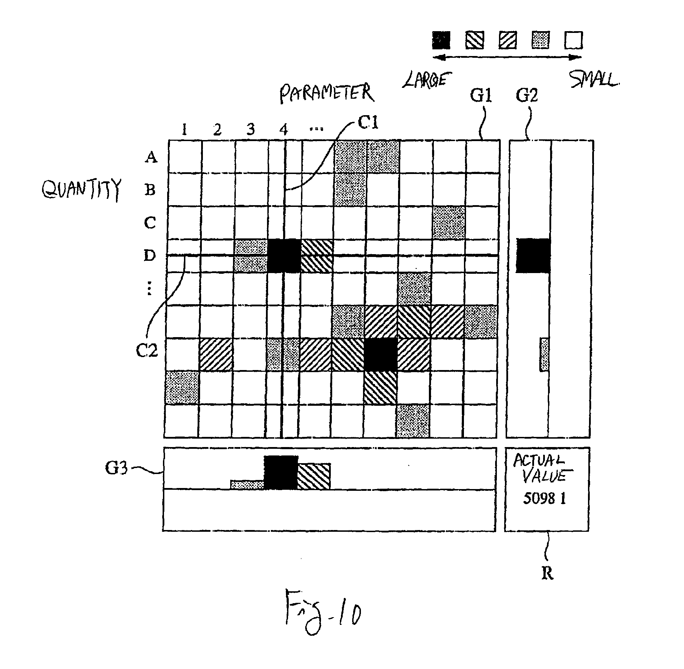

Fig. 9 shows an example where the vertical axis represents characteristic quantities and the horizontal axis represents parameters, showing that the combination of Characteristic Quantity D and Parameter 4 results in a high evaluation value and suggesting that this combination may be used as one of candidates to be used as condition for actually carrying out a calculation of characteristic quantity for an abnormal sound detecting system. The example of Fig. 9 shows, however, that there are two areas where the evaluation value becomes very high. In this situation, the hair cursors C 1 and C2 may be moved as shown in Fig. 10 such that a comparison can be made between the actual numerical evaluation values.

It is preferable that calculated results of characteristic quantities be normalized. This is because the maximum value of calculation varies frequently, depending on the kind of the characteristic quantity. In order to compare evaluation values for different characteristic quantities, therefore, more accurate judgment can be made by normalizing the evaluation values such that the values can be compared on the same scale.

Although the magnitude of evaluation values for a characteristic quantity is represented by the level of density, this is intended to be merely an example. Different colors or circles with different radii may be used to distinguish among different levels of evaluation values. Even numerical values may be directly written in on the graph. What is essential according to this invention is that a display be made such that the user can visually distinguish a favorable combination corresponding to a high evaluation value.

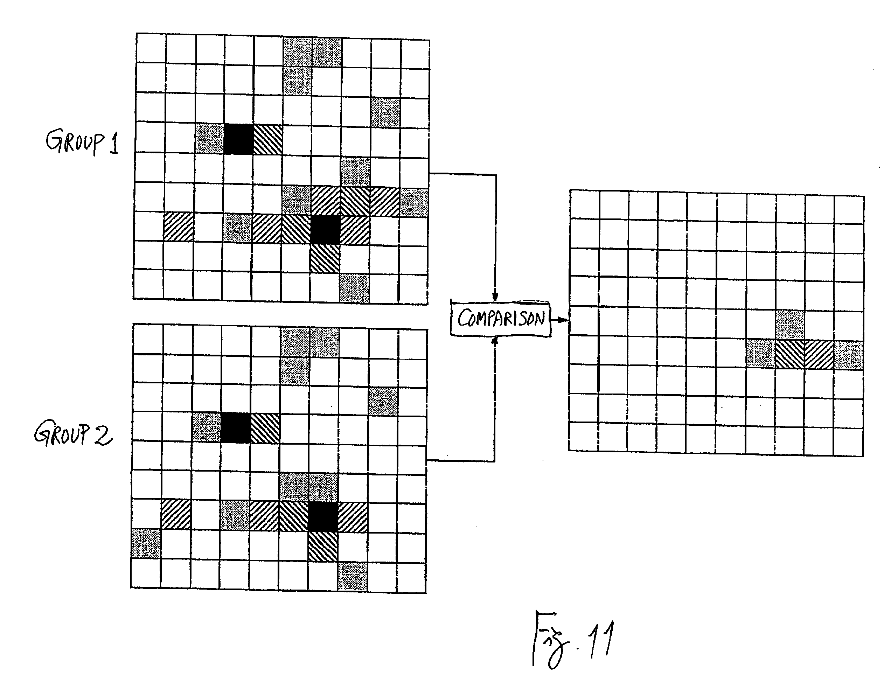

Fig. 11 shows an example where the results of calculating characteristic quantities based on waveform data belonging to two different groups are being compared by calculation. After values of characteristic quantities are calculated based on waveform data belonging to each of two groups and graphs like the main graph G1 shown in Fig. 9 are prepared, a comparison process is carried out, say, by calculating the difference between these two graphs to fmally obtain a comparison result graph. Since combinations for which the difference in evaluation values is large between the groups can thus be clearly picked out, preferable characteristic quantities and parameters for distinguishing between the groups can be easily obtained. In the case of the illustrated example, the combination of Characteristic Quantity D and Parameter 4 provides a large evaluation value but since a large evaluation value is obtained by waveform data belonging to either of the groups, it may be concluded that it is not a combination suitable for distinguishing between these two groups.

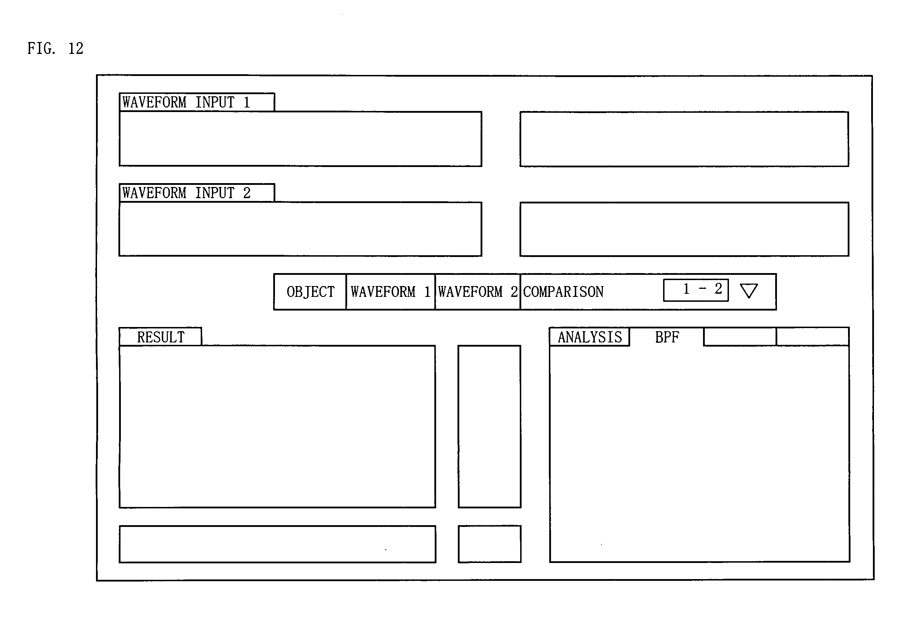

Fig. 12 shows an example of display screen on the display device, unifying the individual display screens of the aforementioned input and output interfaces. According to this example, two input indicating areas for waveform data are prepared at the top, each input indicating area being provided with two waveform display areas of which the one on the left-hand side is for showing the whole of a waveform and the other on the right-hand side is for showing a portion thereof in an enlarged form along the time-axis in the horizontal direction. The area for displaying a list may be positioned in any appropriate manner. The screen for setting a calculation mode shown in Fig. 4 corresponds to the "object of analysis" at the center of Fig. 12. The layout of the "Comparison" button, etc. is also modified. If the sheet with the heading "BPF" shown in Fig. 12 is selected, a pattern setting screen as shown in Fig. 7 is displayed. Since the example shown in Fig. 12 is adapted to obtain all of the prepared characteristic quantities, there is no setting screen for characteristic quantities as shown in Fig. 8. If a selection is to be made, such a display may be made superposed to this sheet. The bottom left-hand side of Fig. 12 is for displaying a graph of the calculation results, etc.

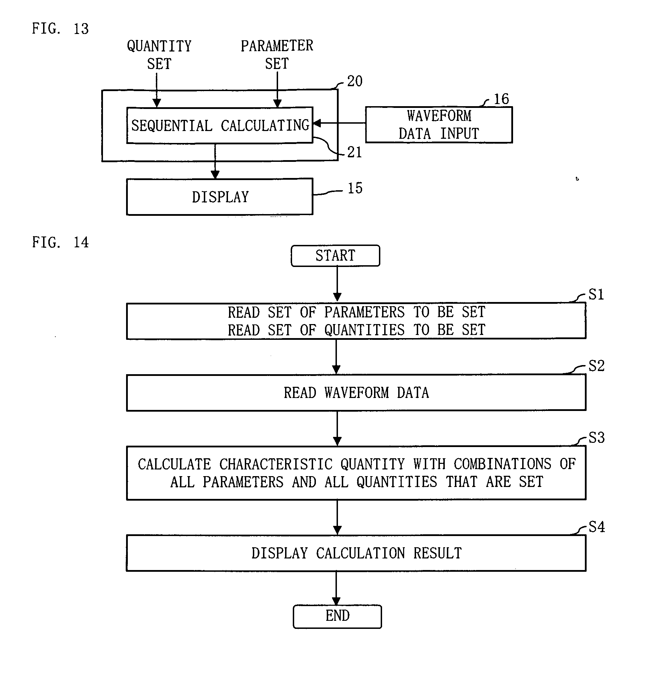

Functions of the calculating part 20 are explained next more in detail. Fig. 13 shows the calculating part 20 operating according to a first embodiment of the invention. Characteristic quantities and parameters are set respectively along the vertical and horizontal axes by means of the axis selecting part 13 and either "Waveform 1" or "Waveform 2" is selected by the calculation mode switching part 12. One waveform data item is obtained by using the corresponding input indicating area and this waveform data item is provided to the calculating part 20 through the waveform data input part 16. The calculating part 20 includes a sequential calculating part 21 for calculating values of characteristic quantities sequentially according to a set condition.

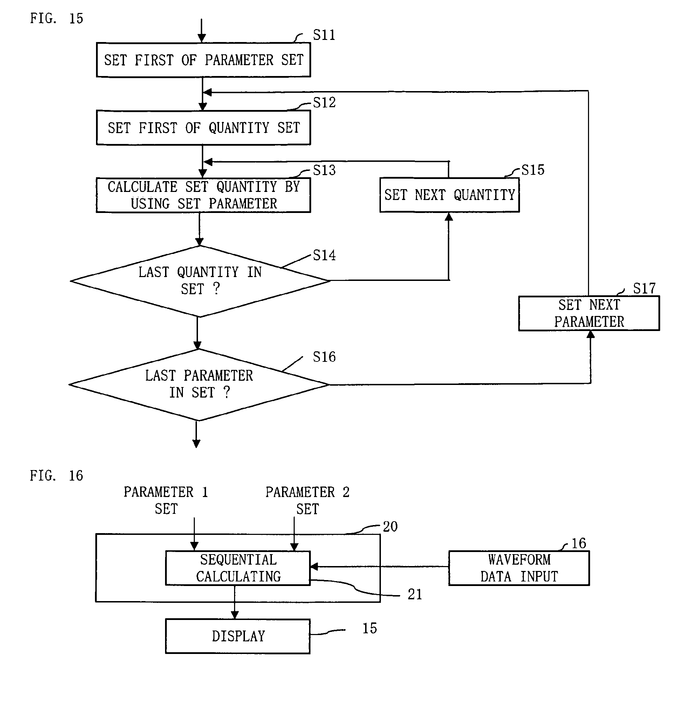

Fig. 14 is a flowchart of the sequence of processes carried out by the calculating part 20 according to the first embodiment. To start, the sets of parameters and characteristic quantities set by the axis selecting part 13 and the axis pattern setting part 14 are read in (Step S1). Examples of the set of characteristic quantities include RMS and maximum amplitude level. Examples of the parameter set include combinations of upper and lower limit values of a band pass filter such as 13Hz-18Hz, 20Hz-28Hz and 25Hz-35Hz. Next, the waveform data which are the object of processing are read in from the waveform data input part 16 (Step S2). The order in which Steps S 1 and S2 are carried out may be reversed.

Next, values are calculated for combinations of all parameters and all characteristic quantities that were set by executing Step S 1 for given waveform data (Step S3). If the parameters are the pass bands of a band pass filter as described above, for example, the calculations of values of characteristic quantities are carried out for the frequency components that have passed for the waveform data read in by executing Step S2. Evaluation values are normalized for each characteristic quantity by using the maximum evaluation value such that parameters that are effective for each characteristic quantity can be easily identified.

The evaluation values obtained by executing Step S3 are transmitted to the calculation result display part 15 such that the calculation results are displayed all together (Step S4). If the horizontal axis is set for parameters and the vertical axis is set for characteristic quantities by the axis selecting part 13, for example, a display may be made as shown in Fig. 9 with parameters arranged along the horizontal axis, characteristic quantities arranged along the vertical axis and the magnitudes of the evaluation values each calculated by combining a parameter and a characteristic quantity shown by different densities. As explained above, the display may be made by using different colors or as a three-dimensional graph. What is important is that the display be made such that the user can easily ascertain visually where to find a high evaluation value on the graph for each characteristic quantity for the waveform data that have been read in.

Step S3 of Fig. 14 is carried out by the aforementioned sequential calculating part 21 according to the flowchart of Fig. 15. To start, the first of the set of the parameters is selected (Step S11) and the first of the set of characteristic quantities is selected (Step S12) such that one of the conditions is set each along the vertical and horizontal axes.

Next, the parameter that has been selected is used to calculate the value of the characteristic quantity that has been selected for the obtained waveform data (Step S13). This is a similar calculation process carried out, for example, in an ordinary abnormal sound inspection system. It is determined thereafter if the last of the characteristic quantities in the set has been selected (Step S 14) and if the process of Step S 13 was not for the last characteristic quantity (NO in Step S14), Step S 13 is repeated after the next characteristic quantity in the set is selected (Step S15). If the process of Step S 13 was for the last of the set of the characteristic quantities (YES in Step S14), it is determined if the last of the parameters in the parameter set has been selected (Step S16) and if it was not the last parameter (NO in Step S16), Step S12 is repeated after the next parameter is selected (Step S 17). This is repeated until the last of the parameters in the set is selected (Yes in Step S16) and Step S3 in the flowchart of Fig. 14 is completed.

Fig. 16 shows the calculating part 20 operating according to a second embodiment of the invention. Parameters are set along both the vertical and horizontal axes by means of the axis selecting part 13 and either "Waveform 1" or "Waveform 2" is selected by the calculation mode switching part 12. One waveform data item is obtained by using the corresponding input indicating area and this waveform data item is provided to the calculating part 20 through the waveform data input part 16. The calculating part 20 includes a sequential calculating part 21 for calculating values of characteristic quantities sequentially according to a set condition. The axis selecting part 13 is also used to select a characteristic quantity of which the value is to be calculated.

The two sets (Parameter 1 and Parameter 2) of parameters that are thus set for the calculation of a certain characteristic quantity may be of different kinds or of a same kind. In the latter case, their contents may be the same or different.

Let us consider an example wherein Parameter 1 is a set of data use frequencies N (the number of times data have been used) and Parameter 2 is a set consisting of combinations of upper and lower limit values of a band pass filter. Let us further assume that the characteristic quantity is the maximum amplitude level and that N-number of largest amplitudes are to be extracted as the characteristic quantity. In this example, as the waveform data are read in, the sequential calculating part 21 carries out a band pass filtering process thereon and then the maximum amplitude level is calculated. This calculation process is carried out as many times as the total number of combinations of Parameter 1 and Parameter 2. The calculation result display part 15 serves to arrange Parameter 1 along the horizontal axis and Parameter 2 along the vertical axis and to show the evaluation values of the characteristic quantity by the combinations of the parameters by varying the density, color, etc. such that the user can easily (visually) grasp the conditions under which the characteristic shown at a maximum amplitude level from the waveform data that have been read in such as in which frequency range and corresponding to which number of used data parts.

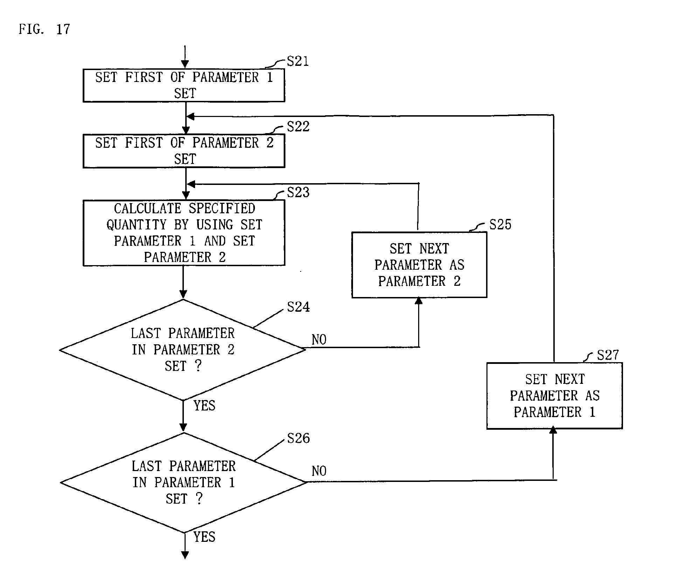

The process described above for the second embodiment of the invention is basically the same as shown in Fig. 14 except the process for calculating the value of the characteristic quantity becomes as shown in Fig. 17 because there are two sets of parameters that are set and there is only one characteristic quantity.

In this case, Step S3 in the flowchart of Fig. 14 starts, as shown in Fig. 17, by selecting the first of the parameters in the set of Parameter 1 (Step S21) and the first of the parameters in the set of Parameter 2 (Step S22) and calculating the value of the specified characteristic quantity by using these selected parameters (Step S23).

It is thereafter determined whether the calculation in Step S23 was by using the last parameter in the set of Parameter 2 (Step S24). If it was not (NO in Step S24), the next parameter in Parameter 2 is selected (Step S25) and the calculation of Step S23 is repeated. If it was by using the last of the parameters in the set Parameter 2 (YES in Step S24), it is determined whether the calculation was by using the last of the parameters in the set of Parameter 1 (Step S6). If it was not the last (NO in Step S26), the next parameter in the set Parameter 1 is selected (Step S27) and Steps S22, S23 and S24 are repeated until the determination in Step S26 becomes YES and the entire process of Fig. 17, or Step S3 in the flowchart of Fig. 14, is completed.

Next, a situation where two sets of parameters (Parameter 1 and Parameter 2) of the same kind are selected is described as the third embodiment of the invention. An example of such situation will be where Parameter 1 and Parameter 2 both relate to a combination of upper and lower limit values of a band pass filter. In such a situation, the sequential calculating part 21 will read in waveform data, carry out a specified calculation on the waveform data that have been read in by using each of the combinations of upper and lower limit values and then carry out a specified comparison calculation by using evaluation values obtained based on Parameter 1 and evaluation values obtained based on Parameter 2 such that the user can clearly grasp which is the frequency range where the comparison calculation for characteristic quantity brings about a characteristic most distinctly.

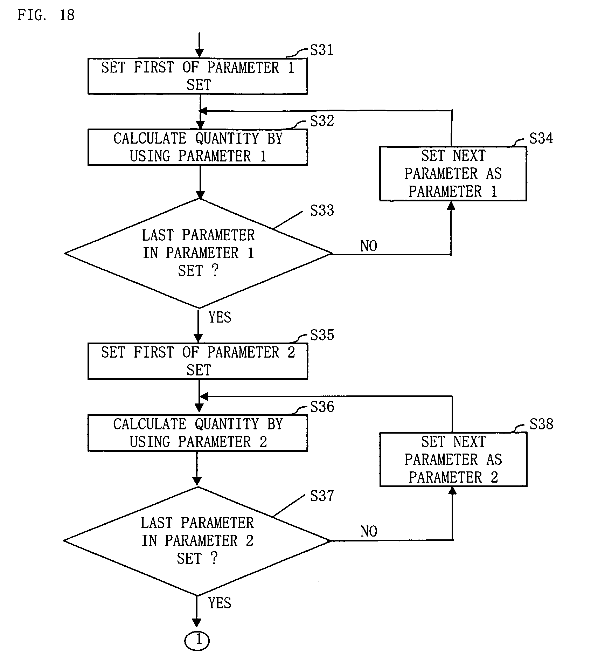

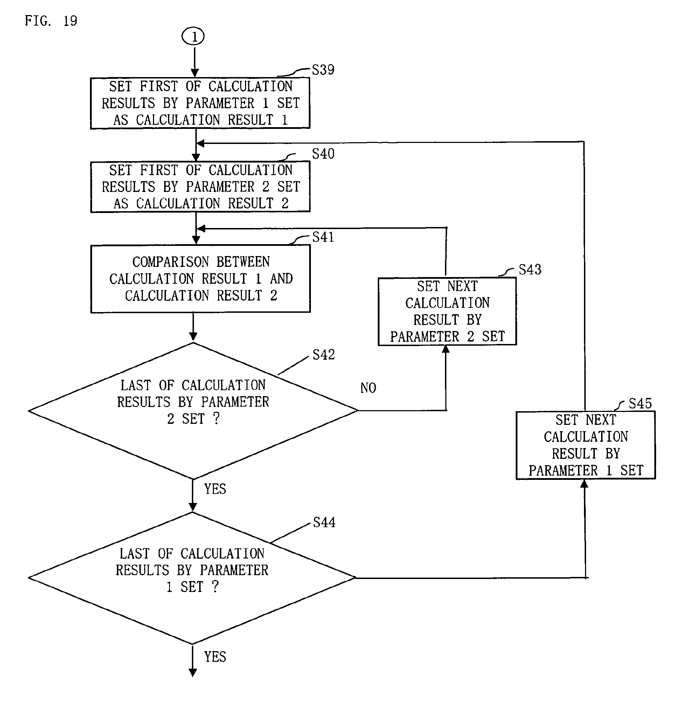

The process described above for the third embodiment of the invention is also basically the same as shown in Fig. 14 except there are two sets of parameters that are selected and there is only one characteristic quantity. The calculation process by Step S3 in the flowchart of Fig. 14 is carried out as shown in Figs. 18 and 19.

Firstly, a parameter from the set of Parameter 1 is sequentially called and selected and a specified characteristic quantity is calculated by using this parameter. This process is repeated such that the calculation of the value of the characteristic quantity for given waveform data are completed by using all of the parameters of the set of Parameter 1 (Steps S31-S34). Next, similar calculations are done by calling in a parameter from the set of Parameter 2 (Steps S35-S38). The parameter set of Parameter 1 and that of Parameter 2 may be different or the same.

Next, a preliminarily prepared comparison calculation is carried out for all combinations of the evaluation values obtained by using the set of Parameter 1 and those obtained by using the set of Parameter 2 to obtain a final calculation result (Steps S39-S45). Explained more in detail, after the first of the evaluation values obtained by using the set of Parameter 1 is set as Result 1 (Step S39) and the first of the evaluation values obtained by using the set of Parameter 2 is set as Result 2 (Step S40), Result 1 and Result 2 are compared to obtain the final calculation result (Step S41). If the calculation of Step S41 did not use the last of the evaluation values of the set of Parameter 2 (NO in Step S42), the next evaluation value is set as Result 2 (Step S43) and Step S41 is repeated. This is continued until the determination in Step S42 becomes YES and it is then determined whether or not the last of the calculation results in the set of Parameter 1 has been used (Step S44). If it was not the last of the evaluation values (NO in Step S44), the next evaluation value for the set of Parameter 1 is set as Result 1 (Step S45) and Step S40 is repeated. Thereafter, the comparison calculation of evaluation values is repeated from the combination with the first of the set as Result 2 until the determination in Step S44 becomes YES and the process of Step S3 in the flowchart of Fig. 14 is completed.

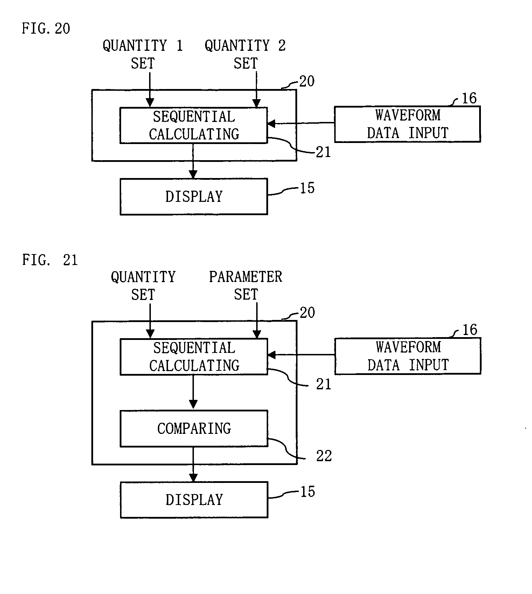

Fig. 20 relates to a fourth embodiment of the invention according to which characteristic quantities are set along both the vertical and horizontal axes by the axis selecting part 13 and either "Waveform 1" or "Waveform 2" is selected by the calculation mode switching part 12. One waveform data item is obtained by using the corresponding input indicating area and this waveform data item is provided to the calculating part 20 through the waveform data input part 16.

The calculating part 20 (or its sequential calculating part 21) carries out calculations by using both Characteristic Quantity 1 and Characteristic Quantity 2 that have been given. The calculations may be carried out as explained above for the first embodiment of the invention, that is, by calculating the value of each characteristic quantity of the set of Characteristic Quantity 1 and each characteristic quantity of the set of Characteristic Quantity 2 and carrying out a preliminarily prepared calculation on all of the combinations between the evaluation values for the characteristic quantities of the two sets Characteristic Quantity 1 and Characteristic Quantity 2.

The calculation result display part 15 serves to arrange Characteristic Quantity 1 along the horizontal axis and Characteristic Quantity 2 along the vertical axis and to show the results of calculation based on combinations of the characteristic quantities by varying the density, color, etc. as explained above such that the user can easily (visually) grasp the difference in the ratio between the values of the characteristic quantities for given waveform data.

Fig. 21 relates to a fifth embodiment of the invention. In each of the embodiments described above, values of characteristic quantities were calculated based on only one waveform data item. According to the fifth embodiment of the invention, two waveform data are transmitted to the calculating part 20 which is provided with the function of obtaining conditions such as characteristic quantities appropriate for distinguishing between these two waveform data.

Explained more in detail, the waveform data input part 16 provides two waveform data items as objects of comparison such as "good" products and "no good" products. The calculating part 20 according to this embodiment is provided not only with a sequential calculating part 21 but also with a comparing part 22. The sequential calculating part 21 carries out a specified calculation for each of the waveform data by using all of the combinations of the characteristic quantities and parameters that have been set. The comparing part 22 carries out comparison calculations between those of the evaluation values of the two waveform data obtained by the sequential calculating part 21, corresponding to the same combination of characteristic quantity and parameter.

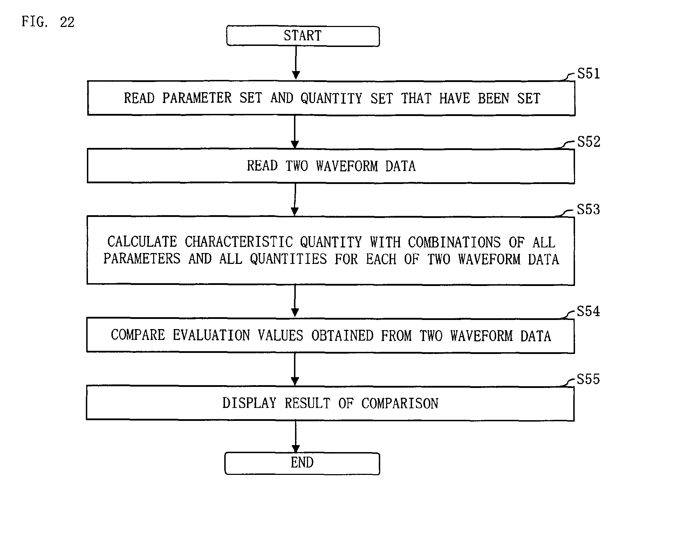

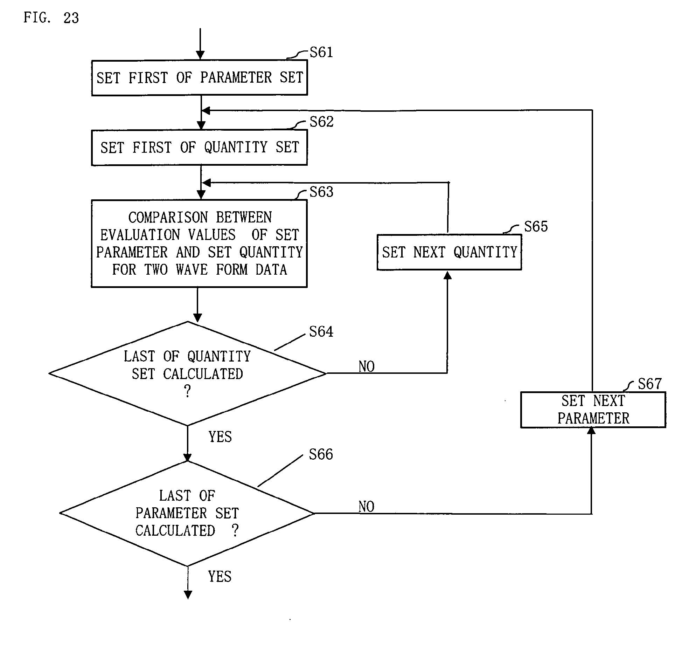

Figs. 22 and 23 are a flowchart of operations carried out by an aid device according to the fifth embodiment of the invention. To start, the sets of parameters and characteristic quantities set by the axis selecting part 13 and the axis pattern setting part 14 are read in (Step S51). Next, the two waveform data which are the object of processing are read in from the waveform data input part 16 (Step S52). The order in which Steps S51 and S52 are carried out may be reversed.

Next, values are calculated for combinations of all parameters and all characteristic quantities that were set by executing Step S51 for each of these two given waveform data (Step S53). If the parameters are the pass bands of a band pass filter as described above, for example, the calculations of values of characteristic quantities are carried out for the frequency components that have passed for the waveform data read in by executing Step S52. This processing of Step S53 is carried out, for example, by the sequential calculating part 21 executing the flowchart of Fig. 15 for each of the waveform data. The evaluation values of the obtained characteristic quantities are transmitted from the sequential calculating part 21 to the comparing part 22.

The processing of Step S54 is carried out by the comparing part 22 executing the flowchart of Fig. 23 in the case where characteristic quantities and parameters are set on the axes as shown in Fig. 21. First, the first parameter of the set of parameters is set to the comparing part 22 (Step S61) and the first of the set of characteristic quantities is set to the comparing part (Step S62). Next, comparison calculations are carried out between the evaluation values obtained for the two waveform data in the combination of the set parameter and the set characteristic quantity (Step S63). Different kinds of comparison calculation such as taking a difference and a ratio may be carried out as long as the method is appropriate for finding out whether the combination of the parameter and the characteristic quantity is efficient. If a difference is used for the comparison calculation, it becomes easier to find a characteristic with the largest difference by normalizing the evaluation values.

When the comparison calculation for one combination of a parameter and a characteristic quantity is completed, it is determined whether the comparison related to the last of the set of characteristic quantities (Step S64). If the calculation has not been done to the last (NO in Step S64); the next one of the set of characteristic quantities is set to the comparison part 22 (Step S65) and Step S63 is repeated. Thus, comparison calculations are executed with all combinations of a characteristic quantity of the set of characteristic quantities with a parameter of the set of parameters and comparison is made between the evaluation values of two waveform data.

When the determination in Step S64 becomes YES, it is determined whether a calculation has been made with the last item in the set of parameters (Step S66). If the calculations have not been done to the last item (NO in Step S66), the next parameter is set to the comparison part 22 (Step S67) and Step S62 is repeated. Comparison calculations are thereafter continued sequentially for the next parameter from the first of the set of characteristic quantities until the determination in Step S66 becomes YES and the comparison calculation process (Step S54) of Fig. 22 is completed.

The comparing part 22 transmits the comparison results obtained by the execution of Step S54 to the calculation result display part 15 for a unified display as shown, for example, in Fig. 11 as a graph showing by density the magnitude of difference between evaluation values of same combinations of parameter and characteristic quantity. As explained above, the display may also be made on a graph with different colors according to the numerical value such that the result of comparison can be easily grasped by the user visually.

In the fifth embodiment of the invention, one set each of characteristic quantities and parameters is set as in the first embodiment. Various combinations are possible, however, for the items to be set as in the second, third and fourth embodiments.

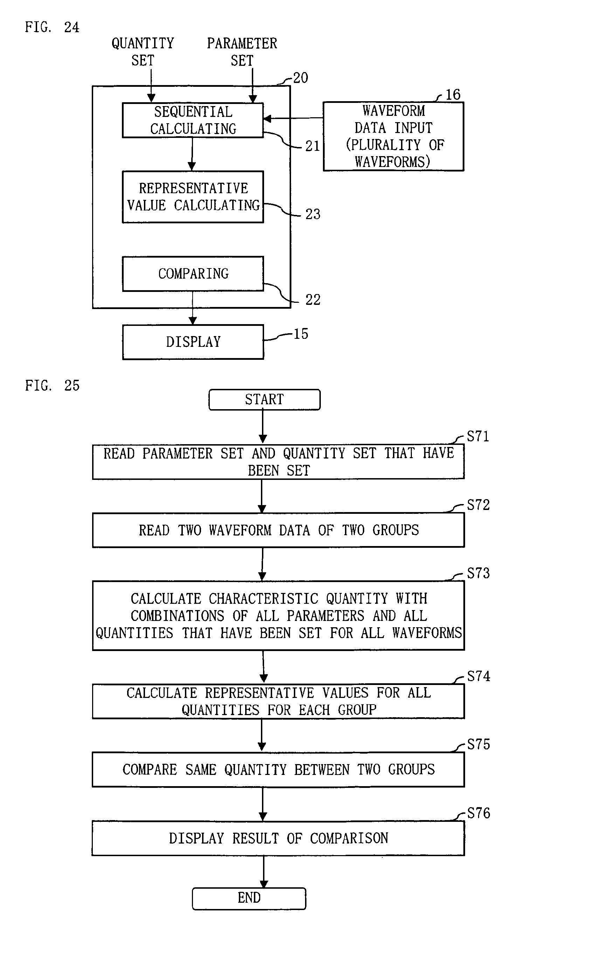

Fig. 24 relates to a sixth embodiment of the invention according to which waveform data and parameters are respectively set along the vertical axis and the horizontal axis by the axis selecting part 13 and "comparison" is selected by the calculation mode switching part 12. Thus, specified waveform data are provided from the waveform data input part 16 to two input indicating areas. Although calculations are carried out according to the other embodiments of the invention described above on the basis of only one waveform data item or two waveform data to be compared, calculations according to the sixth embodiment are carried out by using a plurality of waveform data belonging to at least one of the two groups and evaluation values for this group are examined in a unified manner.

For this reason, the calculating part 20 according to the sixth embodiment of the invention is provided not only with a sequential calculating part 21 and a comparing part 22 but also with a representative value calculating part 23. As explained above with reference to the other embodiments of the invention, the sequential calculating part 21 serves to obtain evaluation values for all combinations of specified characteristic quantities and parameters for given individual waveform data. Thus, if there are a plurality of waveform data belonging to a single group, evaluation values are calculated and obtained for each of the waveforms but the representative value calculating part 23 serves to obtain a representative evaluation value that represents the group for each of the combinations of individual characteristic quantities and parameters and to transmit it to the comparing part 22. At the comparing part 22, therefore, there are two representative evaluation values for a same combination of characteristic quantities and parameters, independent of the number of waveform data given to the calculating part 20. A comparison calculation is thus carried out as in each of the other embodiments of the invention.

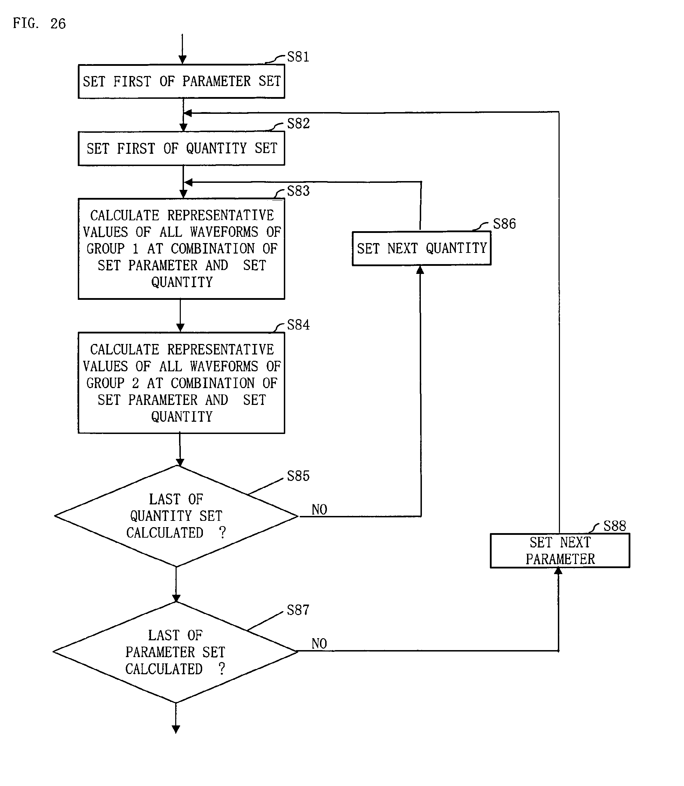

Figs. 25 and 26 are a flowchart of the processes carried out according to the sixth embodiment of the invention according to which the parameter set and the characteristic quantity set that have been set by the axis selecting part 13 and the axis pattern setting part 14 are read in (Step S71) and the waveform data belonging to the two groups that are the objects of processing are read in from the waveform data input part 16 (Step S72). The order in which Steps S71 and S72 are carried out may be reversed.

Next, calculation of values is carried out for all combinations of the parameters and characteristic quantities set by carrying out the process of Step S71 (Step S73). If the parameters are the pass bands of a band pass filter as described above, for example, the calculations of values of characteristic quantities are carried out for the frequency components that have passed for the waveform data read in by executing Step S72. Step S73 of Fig. 25 is carried out by the sequential calculating part 21 according to the flowchart of Fig. 15 for each of the waveform data. The evaluation values thus obtained are transmitted to the representative value calculating part 23.

Next, the representative value calculating part 23 calculates representative values for all evaluation values individually for all groups. This is done according to the flowchart shown in Fig. 26 in the case where characteristic quantities and parameters are set on the axes as shown in Fig. 24. First, the first parameter of the set of parameters is set to the representative value calculating part 23 (Step 81) and the first of the set of characteristic quantities is set to the representative value calculating part 23 (Step 82). Next, a representative value is calculated for the evaluation values obtained for all waveform data belonging to group 1 in the combination of the set parameter and the set characteristic quantity (Step S83). Similarly, a representative value for the evaluation values obtained for all waveform data belonging to group 2 in the combination of the set parameter and the set characteristic quantity is calculated (Step S84).

The representative value for each evaluation value is obtained by calculating the average, median, maximum or minimum of each result obtained for the same combination of characteristic quantity and parameter for each waveform group. If the evaluation values of "no good" data tend to be large and those of "good" data tend to be small, the minimum value may be selected as the representative value for the group of "no good" data and the maximum value may be selected as the representative value for the group of "good" data such that a combination of characteristic quantity and parameter capable of more dependably distinguishing between the two groups can be extracted.

After a representative value is obtained for one combination of a parameter and a characteristic quantity, it is determined whether a calculation has been done for the last in the set of characteristic quantities (Step S85). If the calculation of representative value has not been done to the last (NO in Step S85), the next is set to the representative value calculating part 23 (Step S86) and Step S83 is repeated such that representative values are obtained for combinations of the set parameter and all of the set of characteristic quantities for evaluation values of two groups.

When the determination in Step S85 becomes YES, it is determined whether calculations have been done to the last of the set of parameters (Step S87). If the calculations have not been done to the last (NO in Step S87), the next parameter is set to the representative value calculating part 23 (Step S88) and Step S82 is repeated. Thus, representative values of evaluation values are sequentially obtained from the combination of the next parameter and the first of the set of characteristic quantities until the determination in Step S87 becomes YES and Step S74 in the flowchart of Fig. 25 is completed.

After the representative values of evaluation values of each group are obtained, the representative value calculating part 23 transmits these results to the comparing part 22. The comparing part 22 carried out a comparison calculation process (Step S75) as explained above with reference to the fifth embodiment and transmits the results obtained in Step S75 to the calculation result display part 15 for a unified display (Step S76).

Since Fig. 24 is based on the first embodiment, it shows a characteristic quantity and a parameter that are set but it may be Parameter 1 and Parameter 2 or Characteristic Quantity 1 and Characteristic Quantity 2 that may be set, as in other embodiments. One of the groups may be arranged such that only one waveform data item is inputted. The process of obtaining representative values may be applied also to situations where characteristic quantities of only one group are obtained.

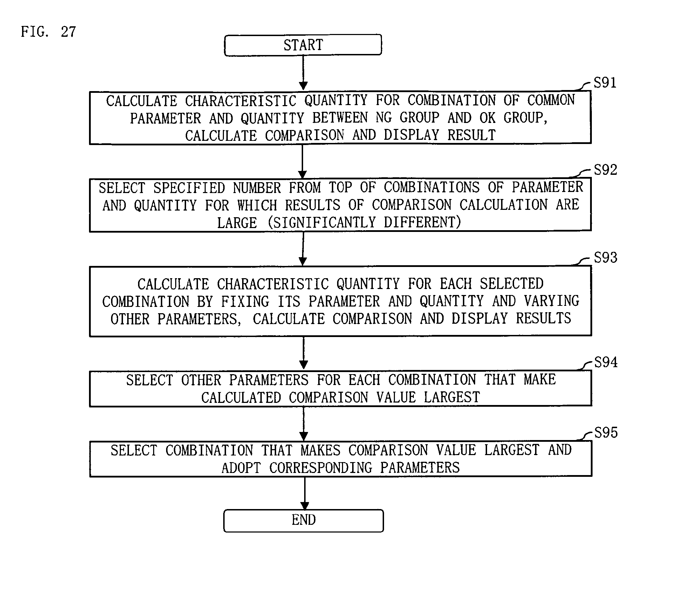

For extracting and adjusting conditions of appropriate characteristic quantities and parameters for an aid device 10 provided with the function for comparing between two waveform data or between two groups of waveform data as described above, it is convenient to proceed according to a flowchart such as shown in Fig. 27. The flowchart shown in Fig. 27 is for finding suitable conditions such as characteristic quantities between a group of "no good" products (NG Group) and a group of "good" products (OK Group) but it goes without saying that the process shown thereby can be used for making a distinction between any two different groups.

To start, combinations of common parameters and characteristic quantities are used for waveform data of NG Group and OK Group to calculate values of characteristic quantities, comparison calculations are carried out between the individual evaluation values and the results are displayed (Step S91). The processing of Step S91 may be carried out by operating the device according to the fifth or sixth embodiment of the invention.

Next, a specified number of combinations of parameter and characteristic quantity with significantly different comparison results are selected from the top (Step S92). Next, these selected combinations of parameter and characteristic quantity are fixed and the other parameters are varied to again calculate values of the characteristic quantities for waveform data of BG Group and OK Group and the results are displayed (Step S93). For each of these combinations, another parameter is selected that will maximize the result of the comparison calculation (Step S94). From the result of having carried out all these processes until Step S94, the combination that brings about the largest result of comparison calculation is selected and accepted as the conditions of characteristic quantity and parameter for the associated abnormal sound inspection system (Step S95).

As an example, let us assume that one of the axes was set to a characteristic quantity set and the other was set to a parameter set to carry out comparison calculations and that the following three combination of characteristic quantity and parameter were extracted as having high evaluation values: {a, 23}, {b, 27} and {b, 23}. Next, as Step S93, characteristic quantity "a" and parameter "23" are fixed and two kinds of parameters A and B related to characteristic quantity "a" are provided to the calculating part 20 to obtain evaluation values for all combinations of parameters A and B for characteristic quantity "a" by setting parameters A and B respectively along the vertical and horizontal axes. Of these evaluation values thus obtained, the largest one is selected (Step S94). Evaluation values are also obtained similarly for all combinations of parameters A and B for combinations {b, 27} and {b, 23} (Step S93) and the largest evaluation value is selected. The characteristic quantity and the parameter to be actually used by the abnormal sound inspecting system are selected from these selected candidates.

In summary, a characteristic quantity and a parameter that are suitable for distinguishing between waveforms for "good" products and "no good" products can be extracted by providing sample waveform data for these products to an aid device of this invention and a judgment condition for the inspection system can be determined. Such characteristic quantity, parameter and judgment condition may be registered in an inspection system for judging the quality of work pieces produced at the production site, say, by using an input device manually for the system. Such judgment conditions created and stored by the aid device may be transferred to an inspection apparatus by any data transfer process such as downloading. After the characteristic quantities and parameters to be used are registered in the inspection system by any of various methods in addition to the above, judgment processes on work pieces produced on an actual production line may be started. For example, a microphone or a vibration sensor may be used to obtain waveform data on the sound from work pieces and their vibrations may be obtained and inputted to the inspection system. The waveform data thus inputted to the inspection system are subjected to the kind of calculation processes described above and judgments are made as to whether they are "good" or "no good", the results of such judgment being subsequently outputted.

## Claims

1. An aid device for an inspection system, said inspection system serving to obtain waveform data from an inspection object, to calculate a value of a characteristic quantity that characterizes said inspection object and to thereby make a judgment whether said inspection object is normal or abnormal, said aid device comprising:
selecting means for selecting one or more characteristic quantities and one or more parameters;
calculating means for calculating a value for given waveform data by using specified combinations of the selected characteristic quantities and parameters; and
display means for displaying a graph based on results of calculation by said calculating means, said graph having at least two axes, each of said two axes being formed by one selected from the group consisting of said one or more characteristic quantities and said one or more parameters selected by said selecting means;
wherein said aid device serves to determine at least either of an effective characteristic quantity for said judgment and a parameter for calculating a value of said effective characteristic quantity.

2. The aid device of claim 1 wherein said waveform data consist of two object waveform data for comparison;
wherein said calculating means calculates values specified characteristic quantities for said two object waveform data by using said specified combinations to obtain calculation results and carries out comparison calculation between said calculation results; and
wherein said graph displayed by said display means is based on results of said comparison calculation.

3. The aid device of claim 2 wherein said graph makes a display by varying one selected from the group consisting of density, color, height and size corresponding to the results of said comparison calculation.

4. The aid device of claim 1 wherein said waveform data consist of a plurality of waveform data belonging to a same group; and
wherein said calculating means calculates values for each of said plurality of waveform data by using said specified combinations to thereby obtain calculation results and determines at least either of an effective characteristic quantity for said judgment and a parameter for calculating value of effective characteristic quantity based on the calculation results on each of said specified combinations for said plurality of data.

5. The aid device of claim 4 wherein said graph makes a display by varying one selected from the group consisting of density, color, height and size corresponding to the results of said comparison calculation.

6. A display method for an aid device for an inspection system, said inspection system serving to obtain waveform data from an inspection object, to calculate a value of a characteristic quantity that characterizes said inspection object and to thereby make a judgment whether said inspection object is normal or abnormal, said aid device serving to determine at least either of an effective characteristic quantity for said judgment and a parameter for calculating value of said effective characteristic quantity, said method comprising the steps of:
selecting one or more characteristic quantities and one or more parameters;
calculating a value by using specified combinations of the selected characteristic quantities and parameters to thereby obtain calculation results; and
displaying a graph based on each of said calculation results for said specified combinations, said graph having at least two axes, each of said two axes being formed by one selected from said selected characteristic quantities and parameters.

7. The method of claim 6 wherein said graph makes a display by varying one selected from the group consisting of density, color, height and size corresponding to the results of said comparison calculation.
